Europäisches Patentamt

European Patent Office

Office européen des brevets

(11) Publication number: **0 421 671 A2**

# EUROPEAN PATENT APPLICATION

(21) Application number: 90310592.2

(22) Date of filing: 27.09.90

(51) Int. Cl.⁵: **G01N 27/406**

(30) Priority: 02.10.89 GB 8922127

(43) Date of publication of application:
10.04.91 Bulletin 91/15

(84) Designated Contracting States:
DE ES FR GB IT

(71) Applicant: **NORMALAIR-GARRETT (HOLDINGS) LIMITED**
Group Patents Dept. Box 206 Westland Works
Yeovil Somerset, BA20 2YB(GB)

(72) Inventor: **Searle, Robin Harry James**
Brampton, Moor Lane
Hardington Mandeville, Somerset(GB)

(74) Representative: **Jack, Bruce James et al**
FORRESTER & BOEHMERT
Widenmayerstrasse 4/I
W-8000 Munchen 22(DE)

(54) Oxygen monitoring apparatus.

(57) Apparatus for monitoring oxygen in oxygen-enriched air includes a solid electrolyte amperometric sensor 10 housed in a body member 11 of test apparatus for verifying functioning of the sensor. A valve member 20 having a recessed end face 22 is slidable within the body member and sis urged by a spring 23 towards closing the recessed end face with a valve seat 19 to provide a chamber 22 in which the sensor is located. When the recessed end face is closed with the valve seat the chamber is communicated by a drilling 36 and a collector recess 35 in the valve member, with an oxygen-enriched air supply line connector 32 provided on the body member. The valve member is moved away from the valve seat by a solenoid actuated member 28 to communicate the sensor with ambient air by way of apertures 40 in the body member. The value of oxygen concentration or partial pressure at which the sensor is set to provide a warning is arranged to be above that of ambient air thereby providing an indication that the sensor is functioning.

## OXYGEN MONITORING APPARATUS

This invention relates to apparatus for monitoring oxygen in oxygen-enriched air and is particularly concerned with test apparatus for verifying functioning of an oxygen sensor forming part of such oxygen monitoring apparatus.

A co-pending European patent application filed on equal date in the name of the present applicant, Normalair-Garrett (Holdings) Limited, and claiming priority from United Kingdom Patent Application No. 8922126.1 filed 2 October 1989, discloses a method and apparatus for monitoring oxygen that is particularly, but not exclusively, suited to monitoring oxygen in oxygen-enriched air delivered by an aircraft on-board oxygen generating system. The apparatus embodies a solid electrolyte amperometric oxygen sensor which does not require a supply of reference gas for comparison with oxygen-enriched air. Particularly in aircraft applications of such apparatus there is a requirement before aircraft commences a flight operation that functioning of the oxygen sensor be verified.

Also, it is possible that because the sensor relies upon gas diffusion for its operation some instability may be experienced in operation over the wide range of altitude, typically 0 to 18000 metres (0 to 60000 ft), required of the next generation of aircraft.

It is an object of the present invention to provide in a package of substantially minimal size test apparatus for verifying functioning of an oxygen sensor embodied in apparatus for monitoring oxygen in oxygen-enriched air.

Another object of the present invention is the provision of such oxygen sensor test apparatus which in aircraft usage of apparatus embodying the sensor protects the sensor against instability in its operation throughout the total altitude range of the aircraft.

Accordingly, in one aspect the present invention provides test appparatus for verifying functioning of a solid electrolyte amperometric sensor forming part of an apparatus for monitoring oxygen in oxygen-enriched air, characterised in that the test apparatus comprises a body member, a valve member slidable in the body member, resilient means for urging the valve means towards closing with a valve seat on the body member to define a chamber in which the sensor is located, means for supplying a sample of oxygen-enriched air to the chamber, and means for moving the valve member away from the valve seat to terminate the supply of oxygen-enriched air and communicate the sensor with ambient atmosphere.

The valve member may comprise a spool valve recessed at one of its end faces to provide walls of the chamber which is formed when a valve face of the spool valve moves towards closing with the valve seat. The valve seat preferably extends around the periphery of a base portion of the sensor.

Means for supplying oxygen-enriched air to the chamber may comprise a collector recess extending circumferentially of the spool valve, the collector recess being positioned between the ends of the spool so as to communicate with an oxygen-enriched air supply line connection provided on the body member when the valve face is closed with the valve seat. A drilling in the spool valve communicates the collector recess with the chamber formed when the valve face moves towards closing with the valve seat.

The drilling may be formed as a flow restrictor orifice over part of its length.

The resilient means may comprise a spring acting between the body member and the valve member and the spring may be rated so as to allow the valve member to modulate with the valve seat in maintaining in the chamber a required constant pressure differential over pressure ambient to the chamber.

Means for moving the valve member away from the valve seat may comprise a solenoid actuated member connected at the other end face of the valve member and adapted to move the valve member against the action of the resilient means when the solenoid is energised.

Means for communicating the sensor with ambient atmosphere may comprise apertures in the body member, the apertures being closed by the valve member when it moves towards closing with the valve seat.

In another aspect of the present invention apparatus for monitoring oxygen in oxygen-enriched air including a solid electrolyte amperometric sensor is characterised by test apparatus comprising a body member, a valve member slidable in the body member, resilient means for urging the valve member towards closing with a valve seat on the body member so as to define a chamber in which the oxygen sensor is located, means for supplying a sample of oxygen-enriched air to the chamber, and means for moving the valve member away from the valve seat to terminate the supply of oxygen-enriched air and communicate the sensor with ambient atmosphere.

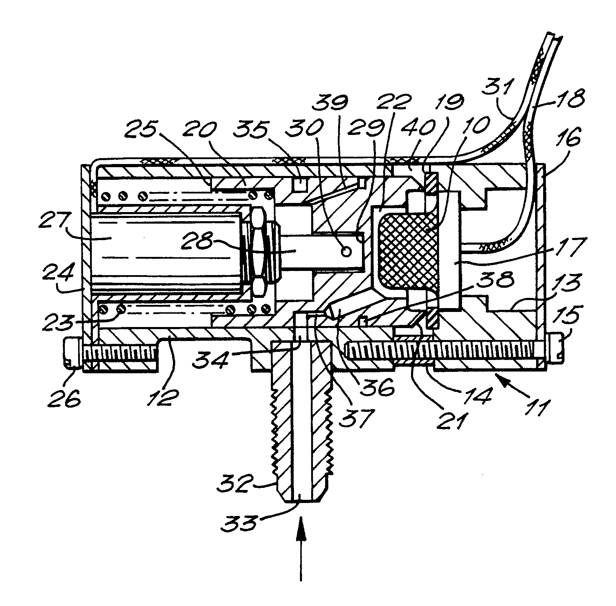

The invention will now be further described by way of example and with reference to the accompanying drawing which shows a cross-section through oxygen sensor test apparatus in accordance with one embodiment of the invention.

Oxygen monitoring apparatus, not shown in detail, includes a solid electrolyte amperometric sensor 10 which does not require a supply of reference gas for comparison with oxygen-enriched air. The oxygen sensor 10 may be of the type in which the electrolyte is provided by a wafer of zirconia doped with yttria and having porous electrodes attached to opposite faces of the zirconia wafer. Oxygen sensors of this type being now well known the construction and operation of such a sensor will not be described in detail.

Test apparatus for verifying satisfactory functioning of the sensor 10 comprises a body member 11 which in this embodiment is formed by two body parts 12 and 13 spaced from each other by tubular spacers 14 located between opposed end faces of the body parts. The body parts and spacers are connected by screws 15 which pass through an end closure plate 16, the body part 13 and spacers 14 into threaded engagement with the body part 12.

A base member 17 of the sensor 10 is located in a recess in that end of the body part 13 which is opposed to the body part 12 and the sensor projects therefrom towards the body part 12. Electrical connection for the sensor 10 is provided by a wiring loom 18 which enters the body part 13 by way of a suitable recess in the body part, the wiring loom being connected to terminals (not shown) on the base member 17. The sensor 10 is held in the recessed end of the body part 13 by an annular shaped valve seat member 19.

The body part 12 is of hollow cylindrical form and a spool valve is slidably located therein. That end of the spool valve 20 which faces the sensor 10 is recessed and is provided with an annular valve face 21. When the spool valve and with it the valve face moves towards the valve seat 19 a chamber 22 is provided around that part of the sensor 10 which projects from the body part 13. The spool valve 20 is urged towards closing its valve face 21 with the valve seat 19 by resilient means which in this embodiment comprises a compression spring 23 acting between an opposite recessed end 25 of the spool valve and an end closure plate 24 secured to the body part 12 by screws 26. A solenoid 27 is housed internally of the body part 12 in axial alignment with the spool valve 20 and projects a core member 28 internally of the recessed end 25 to terminate at an end 29 which is connected with the spool valve by a pin 30. Electrical connection for the solenoid 27 is made by a wiring loom 31 which enters the body part 12 through a suitable recess at that end which is closed by the closure plate 24.

The body part 12 is provided with an oxygen-enriched air supply line connector 32 which in this embodiment is threadly connected with the body part but which may be provided as an integral part thereof. The connector 32 has a central bore 33 in alignment with a supply port 34 in the body part 12. An enriched air distribution recess 35 in the outer surface of the spool valve extends circumferentially thereof. The recess 35 is positioned between the ends of the spool valve so as to be placed in communication with the supply port 34 when the spool valve is urged by the spring 23 to a position in which the valve face 21 closes with the valve seat member 19 as is shown in the drawing. The distribution recess 35 is connected with the chamber 22 by a drilling 36 in the spool valve 20, the drilling 36 providing as a flow restrictor orifice 37 over the initial part of its length extending from the distribution recess.

An enriched air leakage collector recess 38 is provided in the outer circumferential surface of the spool valve at a position between the distribution recess 35 and the valve face 21. A drilling 39 communicates the collector recess 38 with the recessed end 25 of the spool valve.

On commencement of operation of oxygen monitoring apparatus embodying the oxygen sensor test apparatus hereinbefore described with reference to and shown in the accompanying drawing, the solenoid 27 is energised by a switch or press-to-test button (not shown) and the core member 28 is drawn into the solenoid overcoming the action of the spring 23 so that the spool valve 20 and with it the valve face 21 is moved away from the valve seat 19. This movement of the spool valve opens apertures 40 defined by the opposed end faces of the body parts 12 and 13, and the spacers 14 so that the oxygen sensor 10 is placed in communication with ambient atmospheric air which in the case of installation of the apparatus in an aircraft will be aircraft cabin air.

In the case of apparatus which is required to monitor oxygen concentration a warning of low oxygen concentration will generally be required and the apparatus will incorporate an appropriate warning indicator for giving a visual and/or audio indication that the oxygen concentration has fallen below a desired value. As the concentration of oxygen in ambient air is about twenty one per cent this will be sensed by the sensor and will be at or below the minimum value at which a warning is given thus verifying that the sensor is functioning.

Where the apparatus is required to measure oxygen partial pressure the concentration signal from the sensor is multiplied in processing means with a pressure signal from a pressure sensor to obtain a partial pressure signal. In this case the partial pressure of oxygen in ambient air will be at or below the minimum value at which a warning signal is given. When the solenoid 27 is de-energised the compression spring 23 acts to move the spool valve 20 to a position in which the valve face 21 closes with the valve seat 19 and the apertures 40 are closed by the spool valve. With the spool valve in this position the enriched air distribution recess 35 is brought into alignment with the oxygen-enriched air supply port 34. Oxygen-enriched air flows from the supply line (not shown) which is connected to the supply line connector 32, through the port 34 into the distribution recess 35 and by way of the drilling 36 to the chamber 22 where it is sensed by the oxygen sensor 10. The apparatus processes signals from the oxygen sensor 10 using signal processing means which do not form part of the present invention and outputs signals representative of either oxygen concentration or oxygen partial pressure according to which of these values the apparatus is adapted to measure.

Any leakage of oxygen-enriched air from the distribution recess 35 between the spool valve and the body part 12 in the direction of the valve face 21 is caught by the leakage collector recess 38 and vented by way of the drilling 39 to the recessed end 25 of the spool valve. This reduces, substantially, the possibility of oxygen-enriched air leaking to the apertures 40 which if it occurred would result in the oxygen sensor, when the solenoid was energised to verify functioning of the sensor, first sensing oxygen-enriched air so that it would not respond to activate a low oxygen concentration or partial pressure warning indicator until the enriched air had dispersed.

In aircraft usage of oxygen monitoring apparatus embodying sensor test apparatus in accordance with the present invention the spring 23 is preferably designed to allow the spool valve 20 to modulate so as to maintain a constant positive pressure differential of say 34 kPa (5 PSIG) above aircraft cabin pressure. This ensures that at maximum aircraft operational altitude adequate pressure is maintained for sensor operation.

## Claims

1. Test apparatus for verifying functioning of a solid electrolyte amperometric sensor (10) forming part of an apparatus for monitoring oxygen in oxygen-enriched air, characterised in that the test apparatus comprises a body member (11), a valve member (20) slidable in the body member, resilient means (23) for urging the valve member towards closing with a valve seat (19) on the body member to define a chamber (22) in which the sensor is located, means (32, 34, 35, 36) for supplying oxygen-enriched air to the chamber, and means (27, 28) for moving the valve member away from the valve seat to terminate the supply of oxygen-enriched air and communicate the sensor with ambient atmosphere.

2. Apparatus according to Claim 1, further characterised in that the valve member comprises a spool valve (20) having a recess at one of its end faces for defining walls of the chamber which is formed when a valve face of the spool moves towards closing with the valve seat.

3. Apparatus as claimed in Claim 1 or Claim 2, further characterised in that the valve seat extends around a base portion (17) of the sensor.

4. Apparatus as claimed in Claim 2, further characterised in that said means for supplying oxygen-enriched air to said chamber comprises a collector recess (35) extending circumferentially of the spool valve and positioned between the ends of the spool valve so as to communicate, when said valve face is closed with said valve seat, with an oxygen-enriched air supply line connection (32) provided on the body member.

5. Apparatus as claimed in Claim 4, further characterised in that a drilling (36) is provided in said spool valve for communicating said collector recess with said chamber when said valve face is closed with said valve seat.

6. Apparatus as claimed in Claim 5, further characterised in that said drilling is formed as a restrictor orifice (37) over at least part of its length.

7. Apparatus as claimed in any preceding claim, further characterised in that said resilient means comprises a spring (23) acting between said body member and said valve.

8. Apparatus as claimed in any preceding claim, further characterised in that said means for moving the valve member away from said valve seat comprises a solenoid actuated member (30) connected at the opposite end face from said resilient means.

9. Apparatus as claimed in any preceding claim, further characterised in that means for communicating said sensor with ambient atmosphere comprise apertures (40) in the body member, said apertures being closed by said body member when it closes with said valve seat.

10. Apparatus for monitoring oxygen in oxygen-enriched air including a solid electrolyte amperometric sensor (10), characterised by test apparatus comprising a body member (11), a valve member (20) slidable in the body member, resilient means (23) for urging the valve member towards closing with a valve seat (19) on the body member so as to define a chamber (22) in which the oxygen sensor is located, means (32, 34, 35, 36) for supplying a sample of oxygen-enriched air to the chamber, and means (27, 28) for moving the valve member away from the valve seat to terminate the supply of oxygen-enriched air and communicate the sensor with ambient atmosphere.